**Europäisches Patentamt**

**European Patent Office**

**Office européen des brevets**

(19)

(11) Veröffentlichungsnummer: **0 160 185**
**B1**

(12) # EUROPÄISCHE PATENTSCHRIFT

(45) Veröffentlichungstag der Patentschrift:
**13.07.88**

(51) Int. Cl.⁴: **C 21 C 5/52,** F 27 B 3/06,
F 27 B 3/18

(21) Anmeldenummer: **85102766.4**

(22) Anmeldetag: **12.03.85**

(54) **Kippbares metallurgisches Ofengefäss.**

(30) Priorität: **31.03.84 DE 3412077**

(43) Veröffentlichungstag der Anmeldung:
**06.11.85 Patentblatt 85/45**

(45) Bekanntmachung des Hinweises auf die Patenterteilung:
**13.07.88 Patentblatt 88/28**

(84) Benannte Vertragsstaaten:
**CH FR GB IT LI SE**

(56) Entgegenhaltungen:
**FR - A - 969 953**
**FR - A - 992 676**
**GB - A - 1 360 793**
**US - A - 966 310**

**STAHL UND EISEN, Band 104, Nr. 1, 9. Januar 1984,
Seiten 27-30, Düsseldorf, DE; R.-D. BAARE u.a.:
"Schlackenfreier Abstich, ein Hauptproblem bei der
Herstellung von Qualitätsstahl"**

(73) Patentinhaber: **Fried. Krupp Gesellschaft mit
beschränkter Haftung, Altendorfer Strasse 103,
D-4300 Essen 1 (DE)**

(72) Erfinder: **Heidenreich, Peter, Mendenerstrasse 150,
D-4330 Mülheim 1 (DE)**
Erfinder: **Müller, Wolfgang, Auf der Alm 25,
D-5900 Siegen (DE)**
Erfinder: **Heinen, Karl-Heinz, Radschläfe 24,
D-5900 Siegen (DE)**
Erfinder: **Veuhoff, Heinz, Nussbaumweg 1,
D-5900 Siegen (DE)**

## Beschreibung

Die Erfindung bezieht sich auf ein kippbares metallurgisches Ofengefäß, insbesondere Ofengefäß eines Elektrolichtbogenofens, nach dem Oberbegriff des Anspruchs 1.

Ein Ofengefäß eines Elektrolichtbogenofens der eingangs genannten Art ist vorbekannt aus Stahl und Eisen 104, (1984) Nr. 1, Seiten 7 bis 10. Gegenüber Lichtbogen-Ofengefäßen mit einer seitlichen Abstichschnauze ist bei diesen Ofengefäßen vorteilhaft, daß sie ein größeres Ofenvolumen aufweisen und sich der erforderliche Kippwinkel reduziert. Ihr Nachteil besteht aber darin, daß der Schwerpunkt des Gefäßes wesentlich außerhalb der Kippachse liegt und dadurch zusätzliche Kippkräfte erforderlich werden und daß das Gefäß durch die exzentrische Schwerpunktlage im Sinne besonderer Verstärkungen statisch angepaßt werden muß. Bei diesem Ofengefäß ist die Abstichöffnung mit einem Stopfen und einem um eine horizontale Achse verschwenkbaren Deckel verschließbar, der beim Öffnen nach unten weggeschwenkt wird. Hieraus ergibt sich der Nachteil, daß der Deckel bei geöffnetem Verschluß verhältnismäßig weit und störend gegenüber der Unterseite der Erweiterung und damit auch des Gefäßes vorsteht und auch beim Öffnen und Schließen den entsprechend großen Raum benötigt.

Ein seitlich gegenüber der Abstichöffnung eines Kupolofens verschwenkbarer Deckel ist vorbekannt aus der US-A 966 310. Die Abstichöffnung ist jedoch nicht an der Unterseite, sondern in der Seitenwand des Ofens angeordnet, so daß der Strahl des ausfließenden Metalls nicht senkrecht nach unten, sondern waagrecht gerichtet ist. Ferner dient der Deckel nicht dem Zuhalten einer mit einem Stopfen verschlossenen Abstichöffnung, sondern – wie die zahlreich vorbekannten Schieberverschlüsse – insbesondere der Dosierung des ausfließenden Metalls. Während aber die Schieberverschlüsse Schließplatten aus feuerfestem Material aufweisen, besitzt der schwenkbare Deckel eine Platte aus hartem Metall, die mittels einer Schraubenfeder gegen die Abstichöffnung gepreßt wird. Infolge der direkten Hitzeeinwirkung auf das Metall werden die Metallteile, insbesondere die Schraubenfeder, in kurzer Zeit unbrauchbar.

Der Erfindung liegt die Aufgabe zugrunde, ein kippbares metallurgisches Ofengefäß der eingangs genannten Art so zu gestalten, daß es einen im wesentlichen kreisrunden Querschnitt aufweist und trotzdem ein Abstich nach unten außerhalb des Bodens des Gefäßes erfolgt, ohne daß wesentliche zusätzliche Kippkräfte für das Gefäß aufgebracht werden müssen, sowie den Verschluß der Abstichöffnung zu verbessern.

Die Lösung der Aufgabe besteht in den Merkmalen des kennzeichenden Teils des Anspruchs 1.

«Gießschnauzenartig eingeschnürt» bedeutet, daß die Seitenwände des Vorherds die seitliche Öffnung des Ofengefäßes, an welcher der Vorherd angeschlossen ist, nach außen hin etwa geradlinig verlängern.

Die Erfindung bringt den Vorteil, daß keine besondere Ofenkonstruktion erforderlich ist, d.h. daß Ofenherde mit kreisrundem horizontalen Querschnitt hergestellt oder umgerüstet werden können und alle zugehörigen Einrichtungen unverändert verwendet werden können.

Ein weiterer wesentlicher Vorteil besteht darin, daß die Abstichöffnung durch den seitlich verschwenkbaren Verschluß auf einfache Weise verschlossen werden kann.

Eine besonders vorteilhafte Gestaltung des Verschlusses wird dadurch erzielt, daß sein Hebel als zweiarmiger Hebel ausgebildet ist, wobei an seinem freien Ende ein die Schwenkbewegung bewirkender, an der Unterseite des Vorherds aufgehängter Hydraulikzylinder angreift.

Ein festes Anpressen und leichteres Öffnen des Deckels ergibt sich ferner dadurch, daß er mit einer in bezug auf die Abstichöffnung als schiefe Ebene ausgebildete Gleitführungs-Einrichtung versehen ist.

Die erfindungsgemäße Ausbildung des Ofengefäßes ermöglicht außerdem auf einfache Weise eine Beheizung des Vorherds und damit ein sicheres Verhindern eines «Einfrierens», d.h. eines Absinkens der Schmelze unter den Liquidus-Punkt. Wenn als Heizeinrichtung ein einführbarer Brenner verwendet wird, kann dieser gleichzeitig zum Einschmelzen von Schrott o.dgl. eingesetzt werden.

Eine besonders einfache und vorteilhafte Gestaltung wird dadurch erreicht, daß der Vorherd an dem Ofengefäß angeflanscht ist.

Anhand eines schematisch dargestellten Ausführungsbeispiels wird die Erfindung nachfolgend näher erläutert. Es zeigen:

Fig. 1 einen Vorherd nach der Erfindung und einen Teil des zugehörigen Ofengefäßes im senkrechten Mittelschnitt,

Fig. 2 einen Schnitt nach der Linie II-II in Fig. 1 und

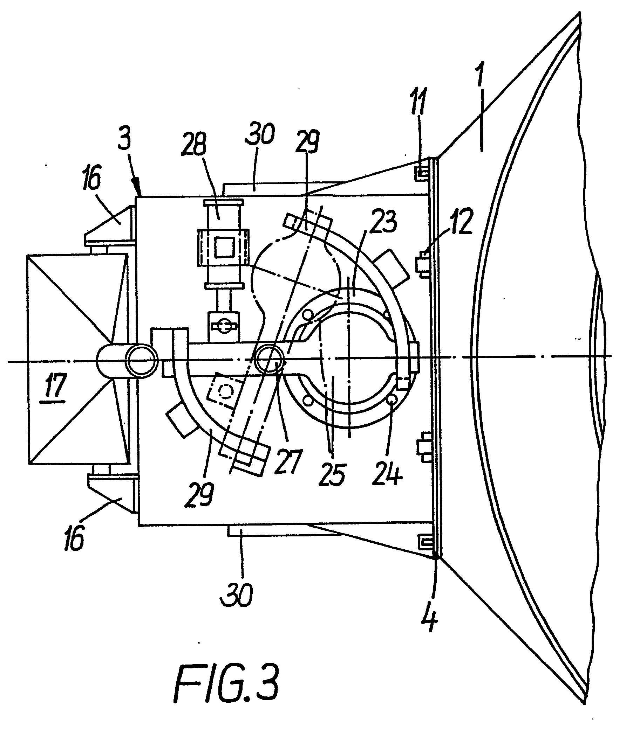

Fig. 3 eine Ansicht in Richtung des Pfeiles III in Fig. 1.

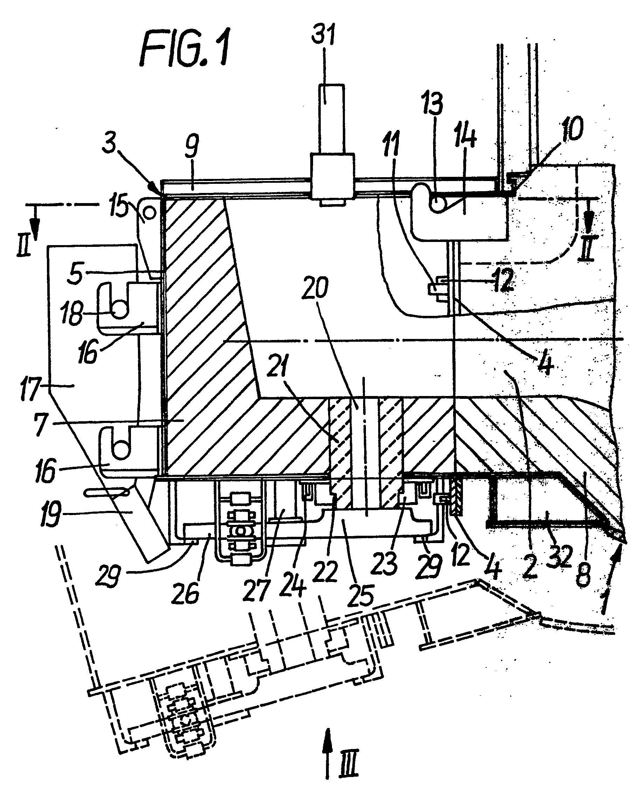

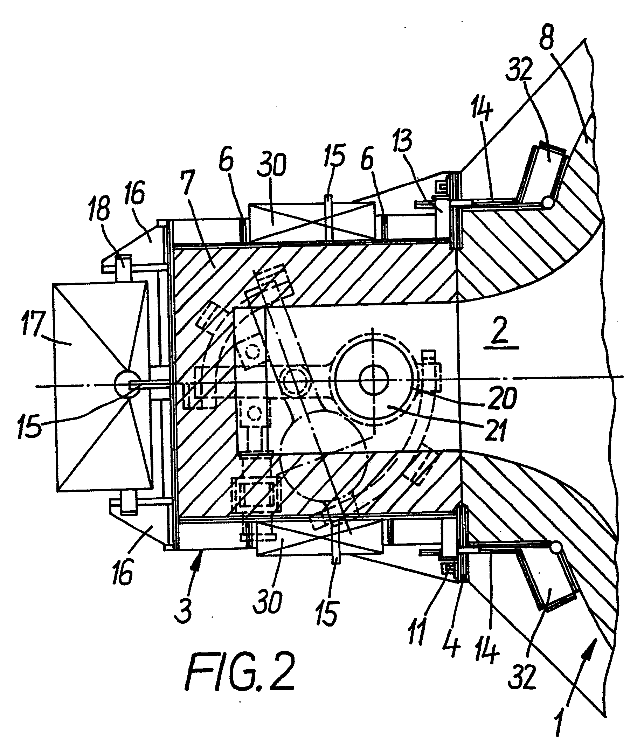

Wie aus den Fig. 1 und 2 zu ersehen ist, weist ein Ofengefäß 1 eines Elektrolichtbogenofens seitlich eine Öffnung 2 mit rechtlichem Querschnitt auf, an welche ein Vorherd 3 mittels einer Flanschverbindung 4 angeschlossen ist. Der Vorherd 3 weist ein etwa quaderförmiges Stahlgehäuse 5 auf, das an den Außenseiten mit Verstärkungsrippen und innen mit einer Auskleidung 7 aus feuerfestem Material versehen ist, die sich bündig an die feuerfeste Auskleidung 8 des Ofengefäßes 1 anschließt. Die offene Oberseite des Vorherdes 3 ist mit einem wassergekühlten Deckel 9 versehen, der ofenseitig über eine Einhak-Verbindung 10 schwenkbar und entfernbar ist.

Die Flanschverbindung 4 erstreckt sich zwischen dem Ofengefäß 1 und dem Vorherd 3 an den Seitenwänden und der Unterseite des Vorherds 3. Der am Ofengefäß 1 angeordnete Flansch der Flanschverbindung 4 ist mit nach außen vorstehenden Bolzen 11 versehen, die keilförmige Ausnehmungen aufweisen, durch welche Anzugskeile 12 gesteckt werden, die den am Vorherd 3 angeordneten Gegenflansch der Flanschverbindung 4 anpressen. Zur Erleichterung des Anbringens und Entfernens des Vorherds 3 weist dieser an seinen beiden oberen dem Ofengefäß 1 zugewandten Ecken je einen seitlich vorstehenden Bolzen 13 auf, der in einem zugeordneten am Ofengefäß 1 angeordneten, oben offenen Haken 14 lagerbar und um die Achse der beiden Bolzen 13 schwenkbar ist. Zum Anhängen des Vorherds 3 dienen in seinem oberen Bereich angeordnete Auglaschen 15. Der Vorherd 3 kann in entferntem Zustand in einfacher Weise gereinigt sowie bei Verschleiß gegen einen neuen bzw. ausgebesserten Vorherd ausgetauscht werden. Die Herstellung des Vorherds ist durch seine quaderförmige Gestalt äußerst billig. Ein nachträgliches Ausrüsten eines bestehenden Ofengefäßes ist durch einfaches Anpassen des Gießschnauzen-Bereichs leicht möglich.

An der dem Ofengefäß 1 abgewandten Außenseite des Vorherds 3 ist in vier dort angeordneten laschenförmigen Lagern 16 ein Aufgabetrichter 17 über entsprechende, in den Lagern 16 einrastende Bolzen 18 eingehängt. Der Aufgabetrichter 17 weist an der Unterseite ein in Richtung auf das Ofengefäß 1 weisendes Verlängerungs-Rohrstück 19 auf, das der Zuführung von Legierungszusätzen in eine nicht dargestellte Pfanne dient, die das aus der Abstichöffnung 20 an der Unterseite des Vorherds 3 ausfließenden Metalls dient.

Die Abstichöffnung 20 ist mit einem rohrförmigen, aus keramischem Material bestehenden Einsatz 21 versehen, der an seiner nach außen vorstehenden Unterseite einen eigezogenen Bund 22 aufweist, an welchem eine entsprechende wassergekühlte flanschartige Halterung 23 angreift. Die flanschartige Halterung 22 ist über eine Keil-Bolzenverbindung 24 an der Unterseite des Vorherds 3 befestigt. Zum Sichern der mit einem Stopfen aus bekanntem geeignetem Material ausgefüllten Abstichöffnung 20 ist an der Ausflußseite ein Deckel 25 angepreßt, der mit einem sich in waagerechter Richtung erstreckenden Hebel 26 versehen ist, welcher als zweiarmiger Hebel ausgebildet ist und an einem mit seiner Achse in senkrechter Richtung sich erstreckenden, an der Unterseite des Vorherds 3 angeordneten Zapfen 27 schwenkbar gelagert ist. Die Schwenkbewegung der Klappe wird durch einen an der Unterseite des Vorherds 3 raumbeweglich aufgehängten doppeltwirkenden Hydraulikzylinder 28 bewirkt, der am freien Ende des Hebels 26 angreift. Zwei als schiefe Ebenen ausgebildete bogenförmige Gleitführungen 29, die ebenfalls an der Unterseite des Vorherds 3 jeweils befestigt sind, führen den zweiarmigen Hebel 26 an seinen beiden Enden so, daß sein Deckel 25 in Schließstellung an die Abstichöffnung 20 angepreßt ist und der Deckel 25 sich während des Öffnens gleichzeitig nach unten bewegt, d.h. eine zusätzliche öffnende Abhebebewegung ausführt. Diese Ausführung des Abstichöffnungs-Verschlusses hat neben einem sicheren Verschließen durch festes Anpressen den Vorteil, daß etwaige Behinderungen der Öffnungsbewegungen durch Anbackungen und Verkrustungen vermieden werden können.

An den beiden sich parallel gegenüberliegenden Seitenwänden des Vorherds 3 ist jeweils eine Induktions-Spule 30 angeordnet, die die erforderliche Abstichtemperatur des Metallbades aufrechterhält und es gleichzeitig durchmischt. Durch eine zentrale Öffnung in dem den Vorherd 3 abdeckenden wassergekühlten Deckel 9 ist ein Öl-Sauerstoffbrenner 31 hindurchgeführt, der in erster Linie dem Einschmelzen von Schrottstücken dient. Er kann aber auch zur Badbeheizung im Falle des Ausfalls der Spulen 30 dienen. Nach Entfernung des Brenners 31 wird die entsprechende Öffnung im Deckel 9 mit einem ebenfalls wassergekühlten Verschluß abgeschlossen. Die Einhakverbindung 10 des Deckels 9 ist gleichzeitig als sogenannte Tassendichtung ausgeführt, die als Abdichtmittel Graphit enthält.

Die maximale Absenkbewegung des Vorherds 3 zusammen mit dem Ofengefäß 1 ist in Fig. 1 durch die entsprechende stichpunktiert dargestellte Kontur gezeigt. Beim Abstechen wird der Ofen jedoch nur soweit gekippt, daß noch ein geringer Sumpf mit der Schlacke im Ofen zurückbleibt. Die Schlacke kann dann anschließend gesondert abgestochen werden. Nach dem vollständigen Entleeren des Ofens wird die geöffnete Abstichöffnung 20 in bekannter Weise mittels einer Sauerstofflanze gereinigt. Danach wird ein neuer Stopfen in den keramischen Einsatz 21 eingeführt und dieser anschließend durch den Deckel 25 verschlossen. Das Ofengefäß 1 ist dann bereit zur Aufnahme einer neuen Charge.

Durch die geringe Masse, die der Vorherd 3 und seine Füllung mit flüssigem Metall darstellt, sind allenfalls geringe zusätzliche Kräfte für den Ofen erforderlich. Die Öffnung 2 des Ofengefäßes 1 weist außerdem einen kragenförmigen wassergekühlten Rahmen 32 auf, der sie umrandet. Dieser Rahmen 32 sowie der Deckel 9 und die flanschartige Halterung 23 sind zusammen an ein Kühlsystem angeschlossen, das gleichzeitig der Kühlung der Seitenwände des Ofengefäßes dient.

**Patentansprüche**

1. Kippbares metallurgisches Ofengefäß, insbesondere Ofengefäß eines Elektrolichtbogenofens, mit einer an der Unterseite mit einer durch einen Stopfen und einen Deckel verschließbaren Abstichöffnung versehenen, allseitig geschlossenen seitlichen Erweiterung, dadurch gekennzeichnet, daß die Erweiterung als gießschnauzenartig eingeschnürter Vorherd (3) ausgebildet ist, und daß der Deckel (25) mittels eines Hebels (26) – in bezug auf die Ausflußrichtung – seitlich verschwenkbar angeordnet ist.

2. Ofengefäß nach Anspruch 1, dadurch gekennzeichnet, daß der Hebel (26) als zweiarmiger Hebel ausgebildet ist, wobei an seinem freien Ende ein die Schwenkbewegung bewirkender, an der Unterseite des Vorherds aufgehängter Hydraulikzylinder (28) angreift.

3. Ofengefäß nach Anspruch 1 oder 2, dadurch gekennzeichnet, daß der Deckel (25) mit einer in bezug auf die Abstichöffnung (20) als schiefe Ebene ausgebildeten Gleitführungs-Einrichtung versehen ist.

4. Ofengefäß nach Anspruch 3, dadurch gekennzeichnet, daß zwei an der Unterseite des Vorherds gefestigte bogenförmige Gleitführungen (29) den Hebel (26) an seinen beiden Enden so führen, daß der Deckel (25) in Schließstellung an die Abstichöffnung (20) angepreßt ist.

5. Ofengefäß nach einer der vorhergehenden Ansprüche, dadurch gekennzeichnet, daß ein als Heizeinrichtung dienender Brenner (31) durch die Wandung des Vorherds (3) einführbar ist.

6. Ofengefäß nach einem der vorhergehenden Ansprüche, dadurch gekennzeichnet, daß der Vorherd (3) an ihm angeflanscht ist.

7. Ofengefäß nach Anspruch 6, dadurch gekennzeichnet, daß die Anflanschung mittels mit Durchsteckteilen (12) versehenen Bolzen (11) erfolgt.

8. Ofengefäß nach Anspruch 6 oder 7, dadurch gekennzeichnet, daß der Vorherd schwenkbar an ihm angeordnet ist.

9. Ofengefäß nach Anspruch 8, dadurch gekennzeichnet, daß der Vorherd um eine horizontale im oberen Bereich der Anflanschung befindliche Achse schwenkbar und mit der Schwenkachse (Bolzen 13) einhängbar ist.

10. Ofengefäß nach Anspruch 8 oder 9, dadurch gekennzeichnet, daß der Vorherd (3) ggf. zusätzlich um eine senkrechte Achse schwenkbar ist.

11. Ofengefäß nach einem der vorhergehenden Ansprüche, dadurch gekennzeichnet, daß der Vorherd (3) im wesentlichen kastenförmig ausgebildet ist.

12. Ofengefäß nach einem der vorhergehenden Ansprüche, dadurch gekennzeichnet, daß der Vorherd (3) mit einem wassergekühlten, vorzugsweise klappbaren Deckel (9) versehen ist.

## Claims

1. A tiltable metallurgical furnace vessel, more particularly a furnace vessel for an electric arc furnace, having on the underside a lateral widened portion which is closed on all sides and has a tapping aperture closable by a stopper and a cover, characterized in that the widened portion is constructed in the shape of a receiver (3) waisted after the fashion of a casting lip, and the cover (25) is disposed to be pivoted laterally in relation to the discharge direction by means of a lever (26).

2. A furnace vessel according to claim 1, characterized in that the lever (26) takes the form of a two-armed lever, whose free end is engaged by a hydraulic cylinder (28) suspended from the underside of the receiver and producing the pivoting movement.

3. A furnace vessel according to claims 1 or 2, characterized in that the cover (25) has a slideway device constructed in the form of an inclined plane in relation to the tapping aperture (20).

4. A furnace vessel according to claim 3, characterized in that two arcuate slideways (29) attached to the underside of the receiver so guide the lever (26) at its two ends that in the closure position the cover (25) is forced on to the tapping aperture (20).

5. A furnace vessel according to one of the preceding claims, characterized in that a burner (31) acting as a heating device can be introduced through the wall of the receiver (3).

6. A furnace vessel according to one of the preceding claims, characterized in that the receiver (3) is flanged thereon.

7. A furnace vessel according to claim 6, characterized in that the flanging-on performed by means of pins (11) having adjusting wedge members (12).

8. A furnace vessel according to claims 6 or 7, characterized in that the receiver is disposed pivotably thereon.

9. A furnace vessel according to claim 8, characterized in that the receiver can be latched in by the pivot pin (pin 13) to pivot around a horizontal axis in the upper zone of the flanging.

10. A furnace vessel according to claims 8 or 9, characterized in that the receiver (3) can if necessary also pivot around a vertical axis.

11. A furnace vessel according to one of the preceding claims, characterized in that the receiver (3) is constructed substantially box-shaped.

12. A furnace vessel according to one of the preceding claims, characterized in that the receiver (3) has a water-cooled, preferably hingeable cover (9).

## Revendications

1. Carcasse de four basculant métallique notamment carcasse d'un four électrique à arc, comportant au niveau de son côté inférieur, une partie élargie latéralement fermée de tous cotés, munie d'un trou de coulée pouvant être obturé par un bouchon ou un couvercle, caractérisée en ce que la partie élargie est constituée par un avant-creuset (3) comportant un rétrécissement en forme de bec de coulée et en ce que le couvercle (25) est monté de manière à pouvoir pivoter sous l'action d'un levier (26), dans le sens latéral par rapport à la direction de la coulée.

2. Carcasse de four selon la revendication 1, caractérisée en ce que le levier (26) est un levier à deux bras sur l'extrémité libre duquel agit un vérin hydraulique (28) qui est suspendu au côté inférieur de l'avant-creuset et qui produit le mouvement de pivotement.

3. Carcasse de four selon l'une des revendications 1 ou 2, caractérisée en ce que le couvercle (25) est muni d'un dispositif de guidage de glissement comportant un plan orienté obliquement par rapport au trou de coulée (20).

4. Carcasse de four selon la revendication 3, caractérisée en ce que deux dispositifs de guidage de glissement (29) en forme d'arcs fixés au côté inférieur de l'avant-creuset guident le levier (26) à ses deux extrémités, de telle manière qu'en position de fermeture, le couvercle (25) soit appliqué sur le trou de coulée (20).

5. Carcasse de four selon l'une quelconque des revendications 1 à 4, caractérisée en ce qu'un brûleur (31) qui constitue le dispositif de chauffage peut être introduit à travers la paroi de l'avant-creuset (3).

6. Carcasse de four selon l'une quelonque des revendications 1 à 5, caractérisée en ce que l'avant-creuset (3) est fixé sur elle au moyen d'une bride.

7. Carcasse de four selon la revendication 6, caractérisée en ce que ladite fixation par bride s'effectue au moyen de boulons (11) munis de pièces (12) permettant un enfoncement.

8. Carcasse de four selon l'une des revendications 6 ou 7, caractérisée en ce que l'avant-creuset est monté de manière à pouvoir pivoter sur elle.

9. Carcasse de four selon la revendication 8, caractérisée en ce que l'avant-creuset peut pivoter autour d'un axe horizontal qui est situé dans la zone supérieure du dispositif à bride et qui est suspendu par l'axe de pivotement (boulon 13).

10. Carcasse de four selon l'une des revendications 8 ou 9, caractérisée en ce que l'avant-creuset (3) est monté de manière à pouvoir pivoter également, le cas échéant, autour d'une axe vertical.

11. Carcasse de four selon l'une quelcouque des revendications 1 à 10, caractérisée en ce que l'avant-creuset (3) a essentiellement la forme d'un caisson.

12. Carcasse de four selon l'une quelconque des revendications 1 à 11, caractérisée en ce que l'avant-creuset (3) comporte un couvercle (9) refroidi à l'eau et, de préférence, pivotant.

FIG.1

FIG.2

FIG.3